# EUROPEAN PATENT APPLICATION

(11) **EP 1 384 831 A1**
(43) Date of publication of application: **28.01.2004**
(21) Application number: 02703481.8
(22) Date of filing: 28.02.2002
(51) Int. Cl.: E03D 5/016

(54) **A FLUSHING TOILET**

(30) Priority: 28.02.2001 CN 01109097
(71) Applicant: Wu, Hao, Futian District, Shenzhen Guangdong 518031 (CN)
(72) Inventor: WU, Hao, Room 11B Jinbao Tower, Jinbaocheng Build., Guan gdong 518031 (CN); TANG, Ming, Room 302, Gate 4, Building 110, Area 1, Chaoyang district, Beijing 100101 (CN); ZHANG, Hongjun, Daxing county, Beijing 102600 (CN); CHEN, Jingxin, Cangzhou Cangjing Chemical Co., Ltd, Cangzhou, Hebei 061108 (CN)
(74) Representative: Ercan, Adnan
(86) International application number: PCT/CN2002/000130
(87) International publication number: WO 2002/068764

(57) **Abstract**

A flushing lavatory consists of toilet pan, crushing pump and circuit control device. The stool crushing pipe is set at the bottom of the toilet pan and connected with the outlet of the crushing pump of the toilet pan. A magnetic valve is set on the stool crushing pipe. The stool collecting pipe is set at the bottom of the toilet pan and has a magnetic valve. The other end of the stool collecting pipe is open and can discharge the sewage. When flush the lavatory, under the control of the circuit control device, the flush liquid forms a circulation in the path generated by the toilet pan, crushing pump, stool crushing magnetic valve, stool crushing pipe and toilet pan and flushes the stool in the toilet pan into the crushing pump to crush. Then the stool liquid will mix with the flush liquid and become a gruel liquid; the circuit control device makes the magnetic value open and the crushing pump will rotate and make the sewage in the toilet pan discharged outside through the crushing pump, magnetic valve and stool collecting pipe. The water can be saved greatly by using the circulated flushing structure and the invention has the good effect of water saving. In addition, the urine collecting device, liquid medicine adding device, double-pump flushing device and automatic stool and urine identification device are set. The above structures combine together and configure the no headwater lavatory flushing system. It has the functions of sanitary flushing, no bad smell and controllable discharge and meets the requirement of environment protection.

## Description

### Field of the Invention

The invention relates to processing unit in the field of water, drain water, waste water or mud residue processing. More particularly, the invention relates to a flushing lavatory used for stool and urine processing. Its main task is to use circulated flushing and stool crushing structure, urine collecting device, double pump flushing device for avoiding sediment accumulation and automatic urine and stool identification method and device to combine together so as to configure a no headwater flushing lavatory. It can only use the urine as flush liquid and realize the clean flushing, no bad smell from the sewage and controllable discharge. Users can finish common flushing and running without applying any control and operation on the lavatory. The invention is a new design with good applicability and big progress. It's suitable to be widely spread in the industry field.

### Background of the Invention

The using of flushing lavatory of sanitary ware has the consanguineous connections with people. Whenever people travel in suburbs or outer suburbs and whenever people travel by taking vehicles or live in a hotel, they can't depart from WC. As for most traveling WC, there is no headwater especially for very remote areas. For the limitation of headwater, people have to suffer from the dirtiness. Sometimes people equip the water tank with a certain amount of water, but when using, people should save water. The bad smell is rather terrible. On the other hand, the discharge of stool and urine is also a difficult environment protection problem. At the district with sufficient headwater, as for water flushing WC, the environment protection problem still exist. Furthermore, some users often forget to flush the toilet, then the cleaning of the WC should depend on the maintenance of the cleaners.

In order to solving the above problems, some water saving WC has been innovated. The most widely used is water recycled type. The representative one is Chinese patent publication number CN20341714 automatic flushing and water circulated management device. It's main feature is that between the toilet pan and the cesspool, setting the absorbing well, medicine sending box, circulating pump, filter chamber, water discharge case, water collecting header and the automatic control part including power supply, controller electronic clock and water level controller. All these components work together and compose the automatic flushing and water circulated management device. It can provide the automatic flushing of stool and urine and at the same time the water is saved. It's sure that this device has practicability. But during the real using, it's found that the following disadvantages still exist:
1.Though the automatic flushing and water circulated Management device has considerable progress in water saving, but it still can't break away from the headwater eventually, so the water saving effect isn't high.
2.The prior water circulated WC also can't depart from filtration, so the filtrating device should be set. Then the filter screen must be changed and maintained timely, thus the labor cost is increased. It couldn't meet the requirement of cost benefit.
3.For the water circulated WC, the circulated water used also should be changed timely, so it's not convenient to be used and can't meet people's demand.

In order to solve the problem of barrage made by the stool and sheets for the flushing lavatory, a kind of lavatory with stool crushing mechanism is innovated. The representative one is Chinese patent publication number CN2101960U electric septic toilet. It consists of electric motor, hogged pump, water feed magnetic valve, time-delay controller, shell, feed flexible pipe and discharge flexible pipe. It has the ability to crush the stool and sheets and pump them out. Thus the flushing lavatory can depart from the septic tank and make the stool and sundries having fluidness. The flushing of the lavatory becomes more unhindered. But it still has the following limitations:
1.Compare with the ordinary flushing lavatory, the electric septic toilet use more water and couldn't save water. It doesn't meet the demand of water saving.
2.The sewage discharged by the electric septic toilet is overabundance. It doesn't meet the requirement of environment protection decrement.
3.The sewage discharged by the electric septic toilet isn't deodorized and disinfected. It doesn't meet the requirement of harmless environment protection.

In order to meet the demand of water saving and environment protection, the related manufacturers try their best to look for the solutions. Through getting rid of the stale and bringing the forth the fresh, a kind of plastic bag packed no water flushing lavatory has been invented. Its main feature is to collect and transfer the stool and sewage with a plastic bag device and do concentrated processing. The new lavatory can provide a no water flushing lavatory for users. Actually, it has advancement, but in the practical using it is found that it still has some defects. The defects make the plastic bag packed no water flushing lavatory couldn't reach the best practical effect. Its defects are as following:
1.Although the plastic bag packed no water flushing lavatory doesn't need water, but it must have the containing apparatus made by plastic to finish the collection and concentrated processing of the stool and sewage. So it needs to set containing apparatus in addition and the manufacturing cost is increased. It couldn't meet the requirement of cost effect.
2.The using cost for each person of the plastic bag packed no water flushing lavatory is high and the whole using cost is increased. It couldn't meet the economic and practical requirement of users. The economic profit isn't high.
3.The main defect of plastic bag packed no water flushing lavatory is it is difficult to degrade the produced mixture sewage of plastic and stool, especially the used plastic is unable to be decomposed. The concentrated stool and urine hasn't done the harmless processing and it's difficult to eliminate and utilize them. Then it has no industry utilizing value.

In order to meet the demand of water saving and environment protection, although many manufacturers try their best to do innovation, but no suitable design has been finished. Because the flushing lavatory should not only meet the demand of water saving and environment , but also should be economical and practical, so a general product can't provide the above multifunction. It's obvious that this is the anxious problem need to be solved. It is a target need to be improved in the field of lavatory manufacturing that how to design a economical and practical multifunction flushing lavatory with the advantages of water saving, environment protection and low cost. Thus it can be seen that the above prior flushing lavatories have many defects and need to be improved.

Whereas the above defects in the prior flushing lavatories, the inventor has done much research and innovation for the purpose of inventing a flushing lavatory with new structure based on many years design and manufacturing experience and his professional knowledge. In order to invent a flushing lavatory with new structure, which can improve the structure of the conventional flushing lavatory and make it more applicable, the inventor has done much research and innovation. After many times of samples studying, finally, the invention with good practical value has been created.

### Summary of the Invention

The main technical problem need to be solved in the invention is to overcome the defects of the prior flushing lavatory and provide a lavatory with new structure for the purpose of eliminating the disadvantage of using too much water of the stool crushing lavatory. The new lavatory can recycle the discharged flush liquid to flush the toilet pan and realize the effect of maximum water saving.

The subsidiary technical problem need to be solved is to provide a flushing lavatory, which can collect the urine as flush liquid when the lavatory is in using. The lavatory not only has the function of urine collection, but also can finish the ordinary operation of flush, stool discharge or crush. It can utilize the waste offal to flush the lavatory and has the good effect of no water flushing.

Another technical problem need to be solved in the invention is to provide a flushing lavatory, which has the automatic liquid medicine adding device. Through a pipe, the environment protection liquid medicine in the medicine pot is conducted into the urine collecting box. The open and close of the pipe is controlled by the magnetic valve. Then the lavatory has the function of automatic environment protection liquid medicine adding.

Another technical problem need to be solved in the invention is to provide a flushing lavatory, which can draw out the liquid from the different level of the liquid storage box by two pumps. At first, use the lower liquid with sediment to flush, and then use the upper clean liquid to flush the sediment, thus the flushing of the toilet pan is finished in order. The invention can utilize the sediment at the same time without the accumulation of the sediment. It can not only flush the lavatory clean, but also can prevent the urine sediment accumulation in long flushing by using the urine.

The technical problem need to be solved in the invention is to provide a flushing lavatory, which has the method of stool and urine automatic identification and the correspondent device. It can identify the stool or urine in numerous actions of the users and let the system cast off the complex and uncertainty of manual identification. It can process the stool and urine with different patterns automatically.

The technical problem need to be solved in the invention is to provide a flushing lavatory, which has a no water lavatory flushing system. The system can be independent on any headwater or artificial water upbound and realize the flushing of the toilet pan. It can keep the discharged ejection and the lavatory clean without bad smell. Then the cleaning and maintenance become much more convenient. In the place of inconvenient to discharge, the system can store the random discharged sewage temporarily and control the discharge effectively. As a whole, the invention has good applicability and can increase the economic profit and has the value of being widely used in the industry.

Another technical problem need to be solved in the invention is realized by the following technical scheme. According to the flushing lavatory provide in the invention, it includes the toilet pan, crushing pump. The crushing pump is fixed in the outlet valley of the bottom of the toilet pan. The pump consists of motor, centrifugal flabellum, crushing tools and other components. The centrifugal flabellum sucks the sewage in the toilet pan into the crushing pump and pump it out from the outlet. The crushing tool fixed in the top of output axis will crush the solid flowing into the pump. The invention, characterized in that it contains the innovated toilet pan and circuit control device. Wherein, the innovated toilet pan, in the bottom near the front, a crush pipe is connected. The magnetic valve controlling the open and close of the crush pipe is set in. The crush pipe is connected with one side of the outlet valley of the crushing pump and at the bottom of the crush pipe, a stool collecting pipe is set. A magnetic valve is mounted in the stool collecting pipe to control the open and close of it. The other end of the pipe is an open end, it can discharge the rejection out of the system. The circuit control device can control all the above electric appliances. The above structures combine together and configure the invention of the flushing lavatory with the recycled flushing and stool crushing structure. When flush the stool, under the control of the circuit control device, the flush liquid will form a positive circulation in the ring-shaped path made by toilet pan, crushing pump, crushing pump magnetic valve, crush pipe and toilet pan. The stool in the pan is flushed into the crushing pump to crush and it will mix with the flush liquid and become a gruel liquid. The circuit control device will open the magnetic valve controlling the open and close of the stool collecting pipe. Then the crushing pump works and the sewage in the toilet pan will go through the crushing pump, magnetic valve, stool collecting pipe and will be discharged out of the system. Through the action of recycled flushing structure, people can save a large amount of water and the water saving effect is rather considerable.

The technical problem need to be solved in the invention is also can be further realized by the following technical measures.

The prescribed flushing lavatory, at the front of the said toilet, a flush pipe is connected. The pipe has a magnetic valve to control open and close of the pipe. The magnetic valve is controlled by the circuit control device. One end of the flush pipe is compressive flush liquid or headwater, and the other end is an outlet nozzle, which is set in front of the toilet pan so that the nozzle can make the flush liquid reach all the directions the sewage will go. Under the control instruction of the circuit control device, the magnetic valve opens and the flush liquid will flow into the toilet pan to flush with the action of the headwater pressure.

The prescribed flushing lavatory, at the front of the said toilet, a flush liquid pump is connected and a flush pipe is set. The outlet nozzle of the open end of the flush pipe is mounted at the front of toilet, the other end is connected with the flushing pump. One end of the flush pipe is connected with the flush liquid or headwater, the other end-the outlet nozzle is set at the front tip of the toilet, so that the flush liquid can reach all the directions the sewage will go. The liquid will flow into the toilet pan with the action of flush liquid pump.

The prescribed flushing lavatory, a urine collecting device is included. The device consists of urine collecting pipe, urine collecting box and circuit control device. The urine collecting pipe is connected with valley of the discharge outlet at the back and bottom of the toilet. At the bottom of the urine collecting pipe, a stool collecting pipe is connected, which has a magnetic valve controlling the open and close of the pipe. Another end of urine collecting pipe is extended and set in the urine collecting box. The urine collecting pipe has a magnetic valve controlling the open and close of the pipe. The box is an enclosed case and the urine collecting pipe and flush liquid pump are set in. The said structures combine together and configure the no headwater flushing system-recycled and stool crush flushing lavatory with urine collecting device. The circuit control device controls the open and close of the urine collecting magnetic valve and it also control the crushing pump not working. The urine flows from the valley of the discharged outlet of the toilet and go through the crushing pump, urine collecting pipe and urine collecting magnetic valve into the urine collecting box, then urine collecting is finished. When the crushing pump doesn't work, it can prevent the stool flow into the urine collecting box and the separation of liquid and solid is realized. With the urine collecting device, the lavatory may have the function of automatic flushing under the intelligent control.

The prescribed flushing lavatory, in addition, an automatic liquid medicine adding device is set. The liquid medicine adding device consists of medicine pot and the circuit control device. The medicine pot is in the upper side of the urine collecting box. The liquid medicine is stored in the medicine pot. A medicine conduct pipe is connected at the bottom of the medicine pot. Another end of the pipe is mounted on the urine collecting box or connected with the urine conduct pipe then to the urine collecting box. A circuit control device is set in the urine conduct pipe to control the magnetic valve. The magnetic valve can control the open and close of the medicine conduct pipe. The circuit control device controls the said electrical appliances and magnetic valve. The above structures combine together and configure the invention of no headwater flushing lavatory with automatic liquid medicine adding device. Through the circuit control device the medicine adding magnetic valve may open during each urine collection. The medicine in the medicine pot will mix with the urine flowing from the outlet of the toilet pan and become a mixed flush liquid. It can eliminate the bad smell of the urine. The invention has the function of automatic environment protection liquid medicine adding and bad smell elimination.

The prescribed flushing lavatory, in addition, a double-pump flushing device is set. The double-pump flushing device includes upper flush liquid pump, lower flush liquid pump, lower liquid conduct pipe, upper clean liquid conduct pipe and circuit control device. The lower flush liquid pump is fixed in the lower part of the upper flush liquid pump and at the bottom of the urine collecting box. The lower and upper flush liquid pump configure the double-pump flushing structure. The lower liquid conduct pipe, its upper end is lower liquid nozzle, which is fixed at the bottom of the toilet and the other end is connected with the lower flush liquid pump. The upper clean liquid conduct pipe, its upper end is fixed with the clean liquid outlet nozzle at the front tip of the toilet and the other end is connected with the upper clean liquid pump. The said circuit control device controls the above electrical appliances. The above structures combine together and configure the invention-no headwater flushing lavatory with double-pump flushing device. With the control of circuit control device, the lower flush liquid pump can draw out the urine sediment from the lower part of the urine collecting box and spray at the back of the toilet accumulating the stool and urine and flush it through the lower liquid nozzle. And then the upper clean liquid pump will draw out the urine clean liquid from the upper part of the urine collecting box. Through the upper clean liquid nozzle, it also spray at the back of the toilet accumulating the stool and urine and flush the toilet repeatedly. The invention has the function of flushing the toilet extremely clean and no urine sediment left.

The prescribed flushing lavatory, in addition, a concentrated nozzle structure is set. At the upper tip end of the lower liquid conduct pipe of the lower flush liquid pump, a one-way check valve is connected. The valve is parallel connected with the stool crush pipe and then connected together with the lower liquid nozzle on the top. The above structures combine with each other and configure the invention-no headwater flushing lavatory with concentrated nozzle structure and double-pump flushing device. The effect of the one-way check valve is only permit the liquid drawn out from the urine collecting box by the lower flush liquid pump flush into the toilet from the nozzle through the said valve, but not permit the liquid in the toilet pan and stool crush pipe to backflow into the urine collecting box.

The prescribed flushing lavatory, in addition, a human body detection device is set. The device is located in the suitable position of the WC. It is used in the circuit control device to detect if anyone is using the flushing lavatory. The detection device can be the photodetection device mounted in the WC or the passive human body infrared detector and also can be the pressure sensor set under the floor of the WC or the position switch mounted on the door lock or cross-pin of WC and other kinds of detection devices. The above structures combine together and configure the invention-flushing lavatory with human body detection device. The working state of the above detection devices can detect if anyone is using the flushing lavatory and will control it through the circuit control device.

The prescribed flushing lavatory, in addition, a liquid level induction system is set. The device consists of liquid level sensor, which is set in the suitable position of the urine collecting box. The above structures combine together and configure the invention-no headwater flushing lavatory with the liquid level induction system.

The prescribed flushing lavatory, the prescribed human body detection device and the circuit control device are the automatic identification method according to the stool and urine. The method is: at first, record the time using the lavatory. The timing begins from the detection device provides the user entry signal. The timing ends at the time of the detection device provides the user leaving signal. The circuit control device will identify the stool or urine according to the length of timing recorded by the timing device. If the using time is shorter than an eigenvalue t0, it is not the stool. If a specific person spends long time when pees, the device still can identify that it is not the stool correctly.

The prescribed flushing lavatory, in addition, has a stool and urine identification device which can identify the stool or urine automatically. The device consists of circuit control device, detection device and the program circuit set in the circuit control device to identify the stool or urine. The detection device is set as a sensor and connected with the input end of the circuit control device. It can transfer the detected signal to the circuit control device.

The prescribed flushing lavatory, a sewage temporary storage device is further set. The said device consists of a stool collecting box, which is an enclosed case and mounted at the outlet of the lower end of the stool collecting pipe of the toilet. The above structures combine together and configure the invention-discharge controllable flushing lavatory.

The prescribed flushing lavatory, the said stool collecting box has a stool discharge pump, which is set at the bottom of the stool collecting box. A discharge pipe is connected with the pump and extend upward out of the stool collecting box. The outlet of the pipe is connected with the external collection entrance. The above structures combine together and configure the invention-electric control discharge flushing lavatory. The liquid stool in the toilet pan will be pumped out by the crushing pump and flow into the stool collecting box. When it is necessary, the stool liquid will be pumped out by the stool discharge pump and the electric control discharge is realized.

The prescribed flushing lavatory, the said circuit control device consists of human body detection device, stool box liquid level sensor, urine box liquid level sensor, control circuit, upper temperature sensor, lower temperature sensor, crushing pump motor, urine collecting magnetic valve, stool crushing magnetic valve, medicine adding magnetic valve, upper flush liquid pump, lower flush liquid pump, stool discharge pump, headlight in WC, occupancy indicating lamp, air exchange fan, frost-resistant heater, warmer. Among them, stool box liquid level sensor, urine box liquid level sensor, upper temperature sensor, lower temperature sensor and human detection device are all sensors. Crushing pump motor, urine collecting magnetic valve, stool collecting magnetic valve, stool crushing magnetic valve, medicine adding magnetic valve, upper flush liquid pump, lower flush liquid pump, stool discharge pump, headlight in WC, occupancy indicating lamp, air exchange fan, frost-resistant heater, warmer are execution units. The said control circuit receives the signal of liquid level, temperature and occupancy transferred from the above sensors and decides which execution unit works, the length of working and working times.

The prescribed flushing lavatory, the said circuit control device consists of the first part direct current power supply part 1, the second part sensor interface part 2, the third part control circuit part 3, the fourth part execution units driving circuit part 4. The sensors transfer the signals to the control circuit 3 through the sensor interface 2. After judged and calculated by the control circuit, the signals are transferred to the execution units driving circuit 4. Through the power magnification of the driving circuit 4, it will drive the execution units to operate and work.

The prescribed flushing lavatory, the said circuit control device, wherein, the direct current power supply circuit part 1 consists of double voltage changer, bridge rectify circuit, three-terminal voltage regulator and its protective circuit diode and filter circuit. The alternating current inputs into the primary side of the changer and through the secondary side, it outputs tow lower voltage AC. The above voltage inputs into the bridge rectify circuit and changes into a pulse direct current. Through the filter, it becomes a direct current. Through three-terminal voltage regulator and filter, it becomes a 5v DC and outputs two general ground +5v DC. The core control circuit part 3 consists of chip microcomputer and its attached circuit. The attached circuit includes crystal vibration providing operating frequency, the resistance and capacitance used for upper reset. The chip microcomputer can change the voltage analog signal sent by the temperature sensor into the digital signal through the AD converter. It also can make the frequency test on the pulse signal transferred by the liquid level sensor through the external clock/counter and identify the human detection switch signal through the inner set pulling high input function. It can send the instructions to the correspondent execution units driving circuit by logical judgment. The sensor interface circuit 2, the human body detection device interface circuit includes connection terminal and capacitance and is connected to the chip microcomputer to judge having person or not. The liquid level sensor, its connection terminal of the interface is connected with the four or negation gate integrated circuit and then to the chip microcomputer. It judges the high-low of the liquid level by the frequency of the square wave signal transferred from the liquid level sensor. The temperature sensor, its interface circuit includes the connection terminal and capacitance and is connected with the chip microcomputer. It judges the high-low of the temperature by the voltage value transferred from the temperature sensor. The execution units driving circuit 4 consists of thirteen complete same driving elements. Every driving element includes optical coupling driving circuit, supper power crystal brake tube, protective high pressure proof capacitance and piezoresistance. Wherein, the optical coupling driving circuit, its input end is connected with the signal output end of the chip microcomputer and +5v. The output end of the optical coupling is connected with the input end of the supper power crystal brake tube. The supper power crystal brake tube, its output end is connected with the parallel connected high pressure capacitance, piezoresistance and execution units. The output end of the above thirteen paths execution units driving elements is connected with the thirteen output base pins of the chip microcomputer and the input end is connected respectively with crushing pump motor, urine collecting magnetic valve, stool collecting magnetic valve, stool crushing magnetic valve, medicine adding magnetic valve, upper flush liquid pump, lower flush liquid pump, stool discharge pump, headlight in WC, occupancy indicating lamp, air exchange fan, frost-resistant heater and warmer. The execution unit is controlled by the correspondent base pin of the chip microcomputer.

### Brief Description of the Drawings

Figure 1 is the first embodiment of the invention, the structure sketch map of the flushing lavatory with circulated flushing and stool crushing construction.
Figure 2 is the second embodiment of the invention, the structure sketch map of the flushing lavatory with circulated flushing and stool crushing construction.
Figure 3 is the third embodiment of the invention, the structure sketch map of the flushing lavatory with urine collecting device.
Figure 4 is the fourth embodiment of the invention, the structure sketch map of the automatic liquid medicine adding device of the flushing lavatory with automatic liquid medicine adding device.
Figure 5 is the fifth embodiment of the invention, the structure sketch map of the flushing lavatory with double-pump flushing device.
Figure 6 is the sixth embodiment of the invention, the structure sketch map of the flushing lavatory with no headwater flushing system.
Figure 7 is the statistical chart concerning service time of defecating or pissing used by the stool and urine automatic identification method in the circuit control device.
Figure 8 is the structure sketch map of the flushing lavatory with stool and urine automatic identification device of the invention.
Figure 9 is the circuitous philosophy diagram of the control device of the invention, flushing lavatory with no water flushing system.
Figure 10 is the circuitous philosophy diagram of the circuit control device of the invention, flushing lavatory with no water flushing system.
Figure 11 is the circuit diagram of the circuit control device of the invention, flushing lavatory with no water flushing system.

### Detailed Description of Preferred Embodiment

The detailed description of preferred embodiment, structures, features and the effects of the flushing lavatory submitted in accordance with the invention will be described as following, combining with the drawings and its better embodiments.

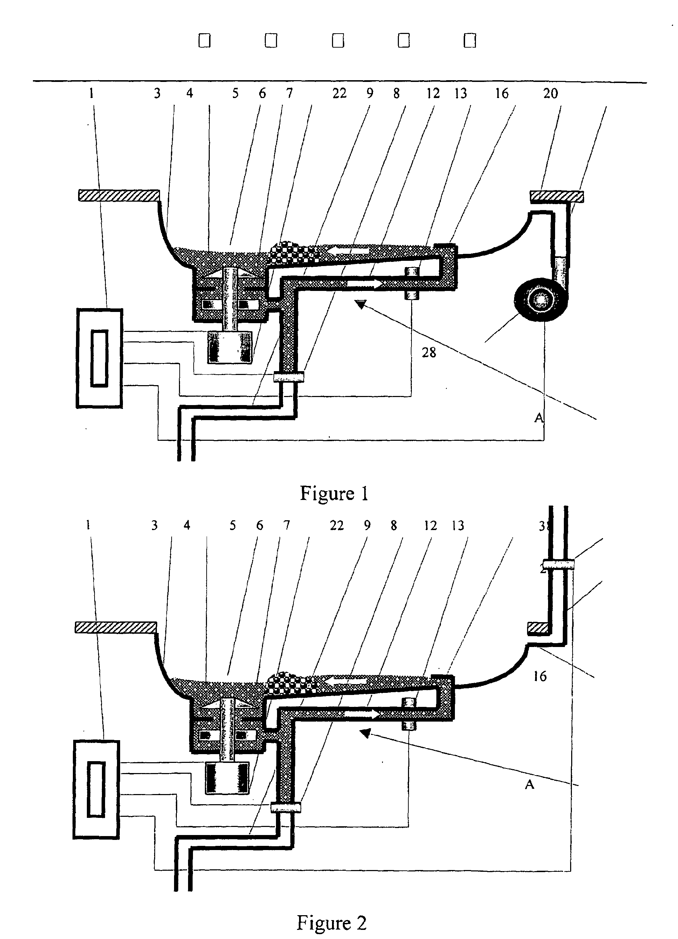

Refer to figure 1, it is the first example of the invention, flushing lavatory with the circulated flushing and stool crushing structure A. It consists of toilet pan 3, crushing pump 5, flush liquid pump 28 and circuit control device 1. Wherein:

The said toilet pan 3, a crushing pump 5 is mounted at the outlet valley of the bottom of its back part. In the bottom near the front of the pan 3, a crush pipe 8 is connected and its stool crushing nozzle is open and fixed at the front bottom of the pan 3, against the stool. The magnetic valve 12 controlling the open and close of the crush pipe 8 is set in it. The crush pipe 8 is connected with one side of the outlet valley of the crushing pump 5 and at the bottom of the crush pipe, a stool collecting pipe 22 is set. A magnetic valve 9 is mounted in the stool collecting pipe 22 to control the open and close of it. The other end of the pipe 22 is an open end, it can discharge the rejection out of the system.

The crushing pump 5 is fixed in the outlet valley of the bottom of the toilet pan 3. The pump consists of motor 7, centrifugal flabellum 6, crushing tools 4 and other components. The motor 7 is fixed at the lateral portion of bottom of the toilet pan 3 and its output axis is set cross the inner cavity at the bottom of the pan 3. The centrifugal flabellum 6 and crushing tools 4 are mounted on the output axis. With the centrifugal effect, the centrifugal flabellum sucks the sewage in the toilet pan 3 into the crushing pump 5 and pump it out from the outlet. The crushing tool 4 fixed in the top of output axis will crush the solid flowing into the pump 5 at this time.

The said flush liquid pump 28 and a flush pipe 20 are set at the front of the toilet pan 3. The outlet nozzle 16 of the open end of the flush pipe 20 is mounted at the front of toilet pan 3, the other end is connected with the flushing pump 28. One end of the flush pipe 20 is connected with the flush liquid or headwater, the other end-the outlet nozzle 16 is set at the front tip of the toilet pan 3, so that the flush liquid can reach all the positions the sewage will go. The liquid will flow into the toilet pan 3 with the action of flush liquid pump 28.

The circuit control device 1 controls all the above electrical appliances.

The above structures combine together and configure the invention, the flushing lavatory with the circulated flushing and stool crushing structure.

Refer to figure 1, when the invention works and flushes the stool, under the control of the circuit control device 1, it will start the flush liquid pump 28 and make it delay for a certain time. Through the outlet nozzle 16 of the flush pipe 20, a definite amount of flush liquid or water flows into the pan of the toilet 3 and then the crushing pump 5 rotates. The magnetic valve 12 controlling the open and close of the stool crushing pipe 8 opens and the flush liquid will form a positive circulation in the ring-shaped path made by toilet pan 3, crushing pump 5, crushing pump magnetic valve 12, crush pipe 8 and toilet pan 3. After the circulation lasts for a certain time, the stool in the pan 3 will be flushed into the crushing pump 5 to crush and it will mix with the flush liquid and become a gruel liquid (figure 1 is this working state).

After the above working procedure is finished, under the control of the circuit control device, the magnetic valve 9 controlling the open and close of the stool collecting pipe 22 opens and the crushing pump 5 rotates. The sewage in the toilet pan 3 will be discharged out of the lavatory system through the crushing pump 5, the magnetic valve 9 and stool collecting pipe 22. At the same time, at the bottom of the toilet pan 3 there is small amount of gruel stool liquid without solid left. Restart the flush liquid pump 28, through the outlet nozzle 16 of the flush pipe 20 connected with the flush liquid or headwater at the front of the toilet pan 3, the pan is easy to be flushed clean. The stool crushing lavatory adding the above circulated flushing structure would decrease the flush liquid need to be used for each stool flushing from 6-12 liter to 0.5 liter and has no effect on the flushing result.

Refer to figure 2, the second embodiment of the invention, the flushing lavatory with circulated flushing and stool crushing construction. It has the same structure with the first embodiment. The difference is the structure of the flush pipe is designed to another kind. The flush pipe 20, its flushing structure is setting a magnetic valve 38 to control its open and close. The magnetic valve 38 is controlled by instructions of the circuit control device 1. The flush pipe 20, one end of it is compressive flush liquid or headwater, and the other end is an outlet nozzle 16, which is set in front of the toilet pan 3 so that the nozzle 16 can make the flush liquid reach all the positions the sewage will go. Under the control instruction of the circuit control device 1, the magnetic valve 38 opens and the flush liquid will flow into the toilet pan 3 to flush with the action of the headwater pressure.

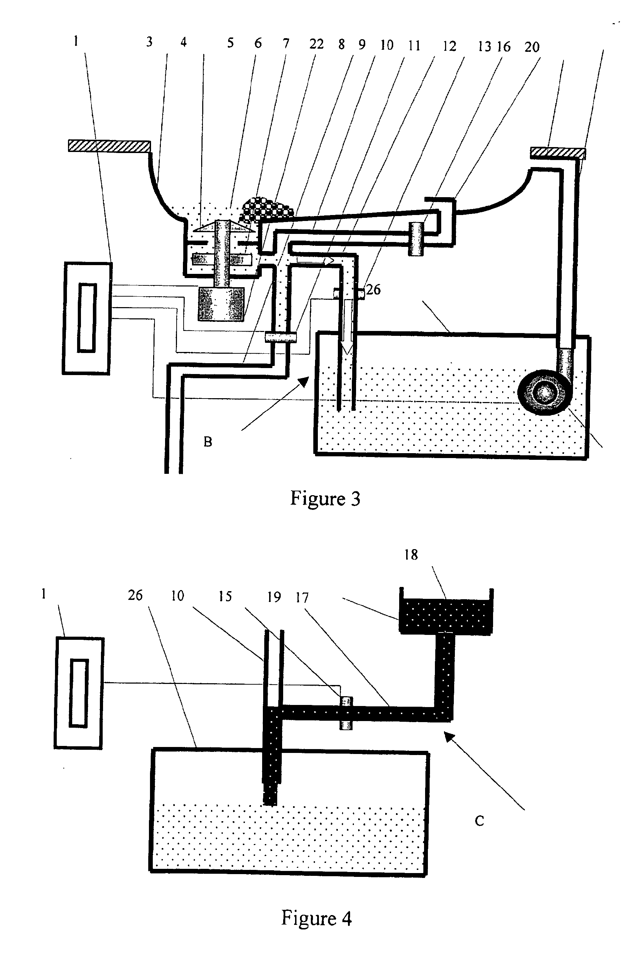

Refer to figure 3, the third embodiment of the invention. It has the same structure with the first and second embodiment. The difference is a urine collecting device B is set, then it becomes the invention, flushing lavatory with urine collecting device. The flushing lavatory can be installed on the ordinary stool crushing lavatory. It includes the toilet pan 3, the crushing pump 5 and the flush liquid pump 28, especially has a urine collecting device B. The urine collecting device B consists of urine collecting pipe 10, urine collecting box 26 and circuit control device. Wherein:

The toilet pan 3, the crushing pump 5 and the flush liquid pump 28 have the same structures with the first embodiment. It's no need to describe it anymore.

The urine collecting pipe 10 is connected with valley of the discharge outlet at the back and bottom of the toilet pan 3. At the bottom of the urine collecting pipe 10, a stool collecting pipe 22 is connected, which has a magnetic valve 11 controlling the open and close of the pipe. Another end of urine collecting pipe 10 is extended and set in the urine collecting box 26. The urine collecting pipe 10 has a magnetic valve 11 controlling the open and close of the pipe.

The urine collecting box 26 is an enclosed case and the urine collecting pipe 10 and flush liquid pump 28 are set in.

The circuit control device 1 controls all the above electrical appliances.

The said structures combine together and configure the flushing lavatory with urine collecting device.

When the invention works, it utilizes the device to realize the function of intelligent toilet pan flushing. During the time of the beginning of defecating and pissing till the toilet pan 3 flushing, the circuit control device 1 controls the urine collecting magnetic valve 11 opens and the crushing pump 5 not working. The urine flows from the valley of the discharged outlet of the toilet pan 3 and through the crushing pump 5, urine collecting pipe 10 and urine collecting magnetic valve 11 into the urine collecting box 26, then urine collecting is finished. If there is stool in the toilet pan 3, after the urine collecting magnetic valve 11 opens, as the stool is uneasy to flow and the crushing pump doesn't work, it can prevent the stool flow into the urine collecting box 26 and the separation of liquid and solid is realized. Then the effective collection of urine in the stool is ensured. When flushing the stool, under the control of the circuit control device 1, the flush liquid pump 28 starts and draws the urine out of the urine collecting box 26. Through the outlet nozzle 16 of the flush pipe 20 connected with the flush liquid or headwater at the front of the toilet pan 3 to discharge and flush. At this time, the flushed urine and the flush liquid flow into the toilet pan 3 with the action of flush liquid pump 28 rapidly. The mixed flush liquid will flush the pan rapidly and the pan is easy to be flushed clean. At the same time, the stool collecting magnetic valve 9 opens and the sewage will be discharged out of the lavatory system through the stool collecting pipe 22. When only flushing the urine, as there is no stool in the toilet pan 3, all the urine and flush liquid can be recovered and utilized. The urine collecting magnetic valve 11 opens under the control of the circuit control device 1. All the flush liquid will be conducted into the urine collecting box 26. With the urine collecting device, the lavatory may have the function of automatic flushing under the intelligent control.
Refer to figure 4, the fourth embodiment of the invention. It has the same structure with the third embodiment (in Figure 4, the same structure with the Figure 3 is omitted). The difference is on the basis of the third embodiment, an automatic liquid medicine adding device C is further set and thus the invention-the flushing lavatory with the automatic liquid medicine adding device is configured. The automatic liquid medicine adding device C consists of medicine pot 17 and the circuit control device 1 Wherein:

The medicine pot 17, refer to Figure 3, The medicine pot is in one side of the urine conducting pipe 10. The sterilized and environment protection liquid medicine 18, which can keep the urine without bad smell in a certain time, is stored in the medicine pot 17. A medicine conduct pipe 19 is connected at the bottom of the medicine pot. Another end of the pipe 19 is mounted on the urine collecting box 26 or connected with the urine conduct pipe 10 then to the urine collecting box 26. A medicine adding magnetic valve 15 controlling the open and close of the urine conduct pipe 10 is set between the urine conduct pipe 10 and the medicine pot 17, which is controlled by the circuit control device 1.

The circuit control device 1 controls the above electrical appliances and the magnetic valve.

The above structures combine together and configure the invention, the flushing lavatory with the automatic liquid medicine adding device.

When the invention works, the open and close of the urine conduct pipe is controlled by the medicine adding magnetic valve 15. The medicine adding magnetic valve 15 is controlled by the circuit control device 1. With the circuit control device 1 the medicine adding magnetic valve 15 can open once during every urine recovery. It makes the sterilized and environment protection liquid medicine 18 stored in the medicine pot 17 mix with the urine flowing from the outlet of the toilet pan 3 and becomes a mixed flush liquid. The flush liquid can eliminate the bad smell of the urine in a certain time and then the invention has the function of automatic environment protection liquid medicine and bad smell eliminating.

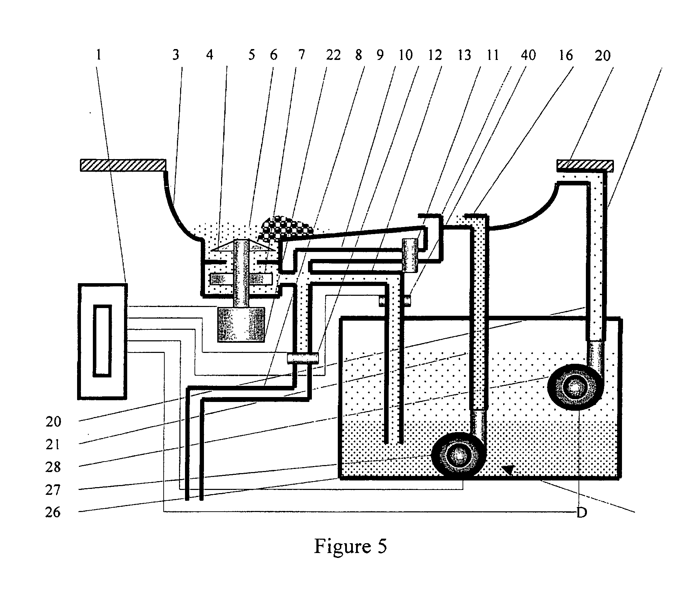

Refer to Figure 5, the fifth embodiment of the invention. It has the same structure with the third embodiment. The difference is on the basis of the third embodiment, a double-pump flush device D is further set and the invention-the flushing lavatory with double-pump flush device is configured. The flushing lavatory also has the toilet pan 3, crushing pump 5, flush liquid pump 28, urine collecting pipe 10 and the urine collecting box 26. As the structure of the toilet pan 3, crushing pump 5, flush liquid pump 28, urine collecting pipe 10 and the urine collecting box 26 is same as the third embodiment, so it will not be described anymore.

The double-pump flushing device D includes upper flush liquid pump 28, lower flush liquid pump 27, lower liquid conduct pipe 21, upper clean liquid conduct pipe 20 and circuit control device 1.

The lower flush liquid pump 27 is fixed in the lower part of the upper flush liquid pump 28 and at the bottom of the urine collecting box 26. The lower and upper flush liquid pump 28 configure the double-pump flushing structure.

The lower liquid conduct pipe 21, its upper end is lower liquid nozzle 40, which is fixed at the bottom of the toilet pan 3 and the other end is connected with the lower flush liquid pump 27.

The upper clean liquid conduct pipe 20, its upper end is fixed with the clean liquid outlet nozzle 16 at the front tip of the toilet pan 3 and the other end is connected with the upper clean liquid pump 28.

The circuit control device 1 controls the above electrical appliances. The above structures combine together and configure the invention-no headwater flushing lavatory with double-pump flushing device.

When the invention works, under the control of circuit control device 1, the lower flush liquid pump 27 can draw out the urine sediment from the lower part of the urine collecting box 26. Through the lower liquid conduct pipe 21, the urine sediment will reach the lower liquid nozzle 40 and spray at the back of the toilet pan 3 accumulating the stool and urine and flush it. And then the upper clean liquid pump 28 will draw out the urine clean liquid from the upper part of the urine collecting box 26. Through the upper clean liquid conduct pipe 20, the urine clean liquid will reach the clean liquid nozzle 16 and also spray at the back of the toilet pan 3 accumulating the stool and urine and flush it repeatedly. Thus, as the lower flush liquid pump 27 and the upper clean flush liquid pump 28 pump the urine flush liquid together, the toilet pan 3 can be finally flushed clean without urine sediment left. The urine sediment liquid in the urine collecting box 26 is consumed during working and it will not accumulate more and more. The toilet pan 3 has two pumps used for pumping the urine flush liquid to flush, so the toilet pan can be flushed very clean without urine sediment left.

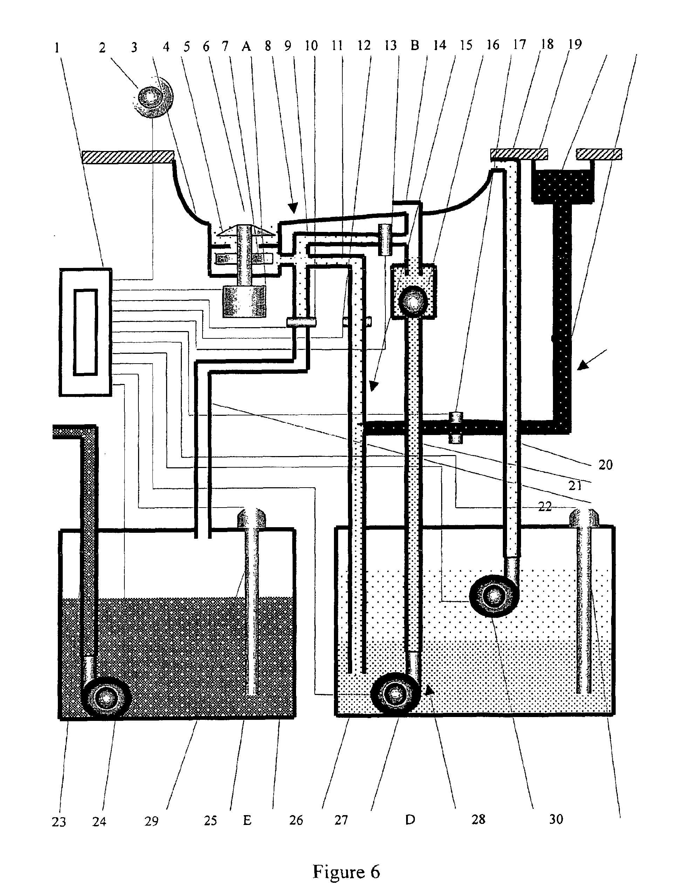

Refer to Figure 6, the sixth embodiment of the invention, the flushing lavatory with no headwater flushing system. It is the further innovated on the basis of the above embodiments. It combines the circulated flushing and stool crushing structure A (the first embodiment and the second embodiment), urine collecting device B (the third embodiment ), automatic liquid medicine adding device C ( the fourth embodiment ),double-pump flushing device D(the fifth embodiment) together and configure the invention, no headwater flushing lavatory.

The no headwater flushing lavatory consists of the circuit control device 1, detection device 2, toilet pan 3, crushing pump 5, stool crushing pump 8, stool collecting magnetic valve 9, urine collecting pipe 10, urine collecting magnetic valve 11, stool crushing magnetic valve 12, medicine adding magnetic valve 15, upper clean liquid nozzle 16, medicine pot 17, medicine conduct pipe 19, upper clean liquid conduct pipe 20, lower liquid conduct pipe 21, stool collecting pipe 22, urine collecting box 26 and upper flush liquid pump 28. The above components have the same structures with the above embodiments and it will not be described anymore. A concentrated nozzle structure G, liquid level induct device F and detection device are further set.

The concentrated nozzle structure G, is the prescribed fifth embodiment. At the upper tip end of the lower liquid conduct pipe 21 of the lower flush liquid pump 27, an one-way check valve 14 is connected. The valve 14 is connected with the stool crush pipe 8 and they parallel connect and then connect together with the lower liquid nozzle 40 on the top. The effect of the one-way check valve 14 is to only permit the liquid drawn out from the urine collecting box 26 by the lower flush liquid pump 27 flush into the toilet from the nozzle 40 through the said valve, but not permit the liquid in the toilet pan 3 and stool crush pipe 8 to backflow into the urine collecting box 26.

The liquid level induction system F consists of liquid level sensor 29, 30, which are set in the suitable position of the urine collecting box 26.

The detection device 2 is located in the suitable position of the WC. It is used in the circuit control device 1 to detect if anyone is using the flushing lavatory. The detection device 2 can be the photodetection device mounted in the WC or the passive human body infrared detector and also can be the pressure sensor set under the floor of the WC or the position switch mounted on the door lock or cross-pin of the WC and other kinds of detection devices. As long as the state of the detection device can show if there is person in the WC. For example, when the user enters the WC, the human body will keep out or reflect the light sent by the photodetection device. Then the state of the photodetection device is changed and the infrared ray sent by the human body will make the state of the passive human body infrared detector changed. When users step at the floor of the WC, the state of the pressure sensor under the floor will be changed. As people lock the door or the cross-pin, it makes the open and close state of the position switch changed. The above working state of the detection device can illustrate if any person is using the flushing lavatory.

The above structures combine together and configure the invention-flushing lavatory with no headwater flushing system.

The invention, based on the above embodiments, a sewage temporary storage device E is further set. They combine together and configure the discharge controllable no headwater flushing lavatory. It is the best embodiment with the combination of the above flushing devices.

Refer to Figure 6,on the basis of the sixth embodiment, a embodiment adding the above sewage storage device E will be described as following.

The sewage storage device consists of a stool collecting box 25 and the stool discharge pump 24. Wherein:

The stool collecting box 25 is an enclosed case and mounted at the outlet of the lower end of the stool collecting pipe 22 of the toilet pan 3

The stool discharge pump 24 is set at the bottom of the stool collecting box 25 and a discharge pipe 23 is connected with it. The discharge pipe 23 extends upward out of the stool collecting box 25 and its outlet is connected with the external collection place.

When the invention works, with the above structures, the bottom of the stool collecting pipe 22 in the toilet pan 3 is connected with stool collecting box 25. Under the control of the circuit control device 1, at the beginning of the defecating or pissing, the timing starts according to the defecating and pissing beginning signal sent by the detection device 2. During the defecating and pissing, the urine collecting magnetic valve 11 opens and the urine will flow into the urine collecting box 26 through the crushing pump 5, urine collecting pipe 10. The separation of liquid and solid is realized. During the urine collection, the circuit control device 1 orders the medicine adding magnetic valve 15 open and makes the environment protection liquid medicine 18 flow into the urine collecting pipe 10 through the medicine pot 17, liquid medicine conduct pipe 19 and mix with the collected urine. The mixed liquid will flow into the urine collecting box 26 and the change from the urine into the flush liquid is finished. If it is urine, when the user leaves the WC, the upper clean flush liquid pump 28 and the crushing pump 5 start. The flush liquid in the urine collecting box 26 will be pumped out by the upper clean flush liquid pump 28 and flow into the toilet pan 3 through the flush liquid pipe 20 and flush it. Then it will be sucked and pumped into the urine collecting pipe 10 with the urine by the crushing pump 5 and will flow back into the urine collecting box 26. If it is stool, the urine collecting magnetic valve 11 closes and the stool crushing magnetic valve 12 opens. Start the lower flush liquid pump 27 and let it last for a certain time. The lower flush liquid about 0.2 -0.3 liter with the urine sediment will spray into the toilet pan 3 through the lower liquid conduct pipe 21, one-way check valve 14 and nozzle 40. Start the crushing pump 5 and the flush liquid will have a circular flow in the path formed by the toilet pan 3, crushing pump 5, stool crushing pump 8, toilet pan 3. With the help of circular flow, the stool will be pushed into the crushing pump 5 to crush and it becomes a gruel liquid with the flush liquid. Then the stool crushing magnetic valve 12 closes and the stool collecting magnetic valve opens. It makes the gruel liquid flow into the stool collecting box 25 through the stool collecting pipe 22. Then start the upper clean flush liquid pump 28 and it pumps the upper clean liquid about 0.2-0.3 liter into the toilet pan 3. The gruel stool liquid left in the toilet pan 3 will be flushed clean and pumped out by crushing pump 5. Finally, it will flow into the stool collecting box 25 through the stool collecting pipe 22. The gruel stool liquid left in the stool collecting box 25 will flow out of the flushing lavatory in suitable time (for example, in the fixed discharge time or someone is cleaning) and the controllable discharge is realized.

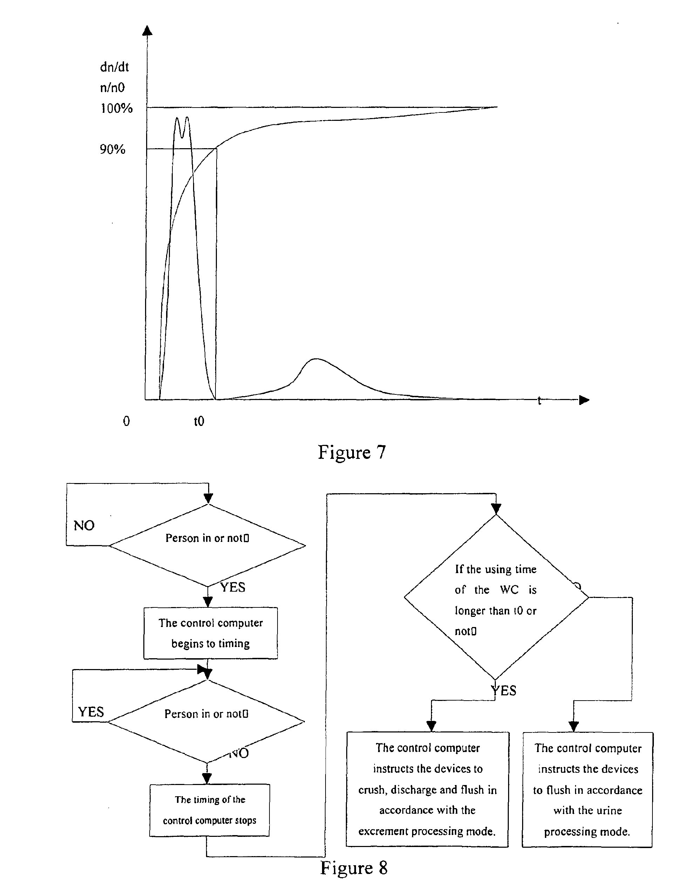

Refer to Figure 7, is the statistical chart concerning service time of defecating or pissing used by the stool and urine automatic identification method and device. It shows the rule of consuming time of defecating and pissing for a person in an ordinary WC by the plane rectangular coordinates. It is the statistical chart drawn according to the sampling situation of the consuming time of defecating and pissing for several hundreds of people's continuous using in a real WC. There are two curves. Wherein: the real line shows the rule of the service time of the WC and the correspondent number of people. The vertical coordinate is the differential of the service time and service people. The abscissa represents the service time in the WC. The imaginary line shows the proportion of the number of people in the total counted people finishing use the WC before a specified time. Its vertical coordinate is the percentage and the abscissa is the service time in the WC.

From the real line in Figure 7, we can see the three peak values respectively show the man pissing, woman pissing and peak time of defecating. From the imaginary line, we can see that 90% of the users' service time is in the time of 0-t0. During this period of time, it almost is pissing.

Through the actual test, no testers can finish the defecating in the time less than t0. Then we can get the following conclusion: a time t0 exists and in the above time, nobody can finish the defecating. According to the actual test, t0 is about between 1 minute to 1.5 minutes.

The above conclusion finds a method of automatic stool and urine identification for purpose of identifying the stool and urine by utilizing the service time in the WC. According to the above identification method, a stool and urine identification device E for the automatic identification of stool and urine is set in the invention.

The stool and urine automatic identification device E consists of circuit control device 1, detection device 2 and the program circuit set in the circuit control device 1 to identify the stool or urine. The detection device 2 is set as a sensor and connected with the input end of the circuit control device 1. It can transfer the detected signal to the circuit control device 1.

Refer to Figure 8, the logical determination sketch map of the stool and urine identification device E of the circuit control device of the flushing lavatory. The circuit control device 1 in the stool and urine identification device E not only can start the procedure of the flushing of the toilet pan 3 according to the user's leaving signal provided by the detection device 2, but also can start the timing based on the signal of the user entering the WC provided by the detection device 2. The timing procedure will end until the detection device 2 provides the user's leaving signal. The circuit control device 1 can identify the stool or urine based on the length of time made by the timing device. That is, when the using time is shorter than a specified eigenvalue t0, it is certain that it isn't the stool in the WC. Because some users spend long time when pissing, then the identification method can't separate all the stool or urine correctly, but it is certain that it can identify the number of people defecating. The reason why this method doesn't call "urine automatic identification method" is because the users leaving the WC in the time of t0, may piss or may do nothing.

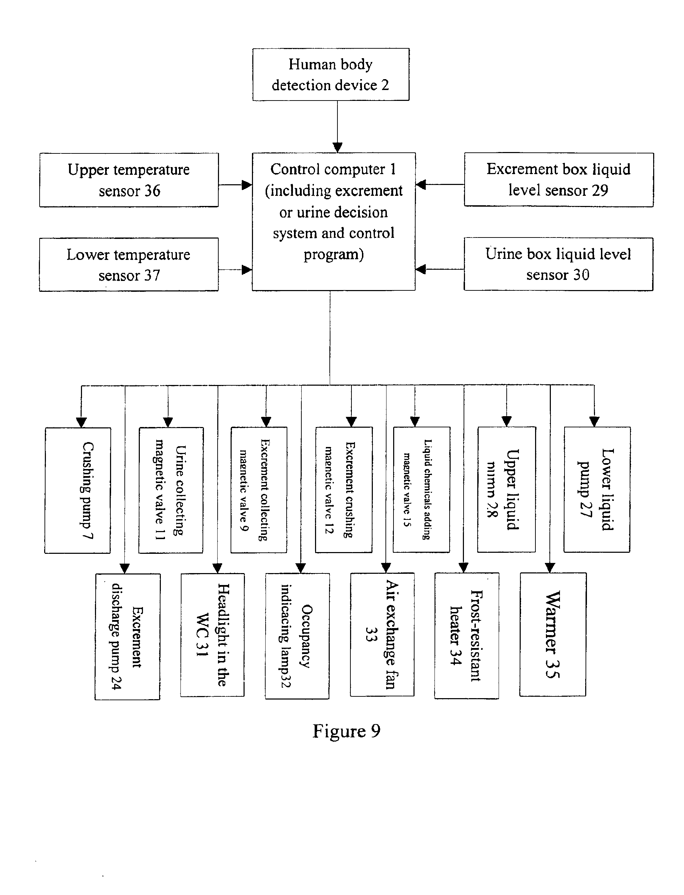

Refer to Figure 9, the control device of the no headwater flushing lavatory consists of human body detection device 2, stool box liquid level sensor 29, urine box liquid level sensor 30, control circuit 1, upper temperature sensor 36 (set in the suitable position of the WC), lower temperature sensor 37 (set in the suitable position of the bottom of the flushing lavatory in the WC), crushing pump motor 7, urine collecting magnetic valve 11, stool crushing magnetic valve 9, stool crushing magnetic valve 12, medicine adding magnetic valve 15, upper flush liquid pump 28, lower flush liquid pump 27, stool discharge pump 24, headlight in WC 31, occupancy indicating lamp 32, air exchange fan 33, frost-resistant heater 34, warmer 35. Among them:

The stool box liquid level sensor 29, urine box liquid level sensor 30, upper temperature sensor 36, lower temperature sensor 37 and human detection device 2 are all sensors. Crushing pump motor 7, urine collecting magnetic valve 11, stool collecting magnetic valve 9, stool crushing magnetic valve 12, medicine adding magnetic valve 15, upper flush liquid pump 28, lower flush liquid pump 27, stool discharge pump 24, headlight in WC 31, occupancy indicating lamp 32, air exchange fan 33, frost-resistant heater 34, warmer 35 are execution units. The said control circuit 1 receives the signal of liquid level, temperature and occupancy transferred from the above sensors and decides which execution unit works, the length of working and working times.

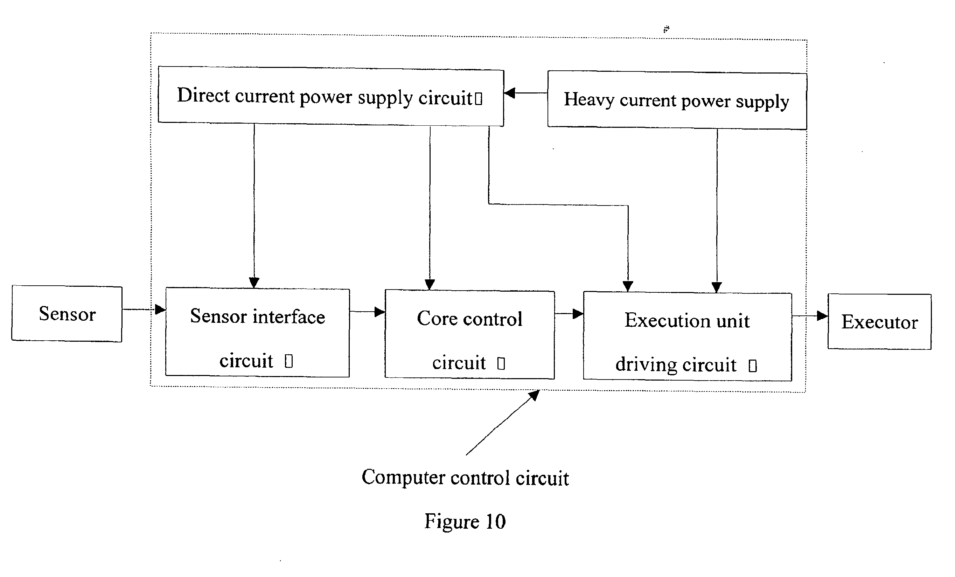

Refer to Figure 10, the circuitous philosophy diagram of the circuit control device of the invention, flushing lavatory with no water flushing system. The circuit control device 1 consists of the first part direct current power supply part 1, the second part sensor interface part 2, the third part control circuit part 3, the fourth part execution units driving circuit part 4. The sensors transfer the signals to the control circuit 3 through the sensor interface 2. After judged and calculated by the control circuit, the signals are transferred to the execution units driving circuit 4. Through the power magnification of the driving circuit 4, it will push every execution unit to work and operate. Wherein:

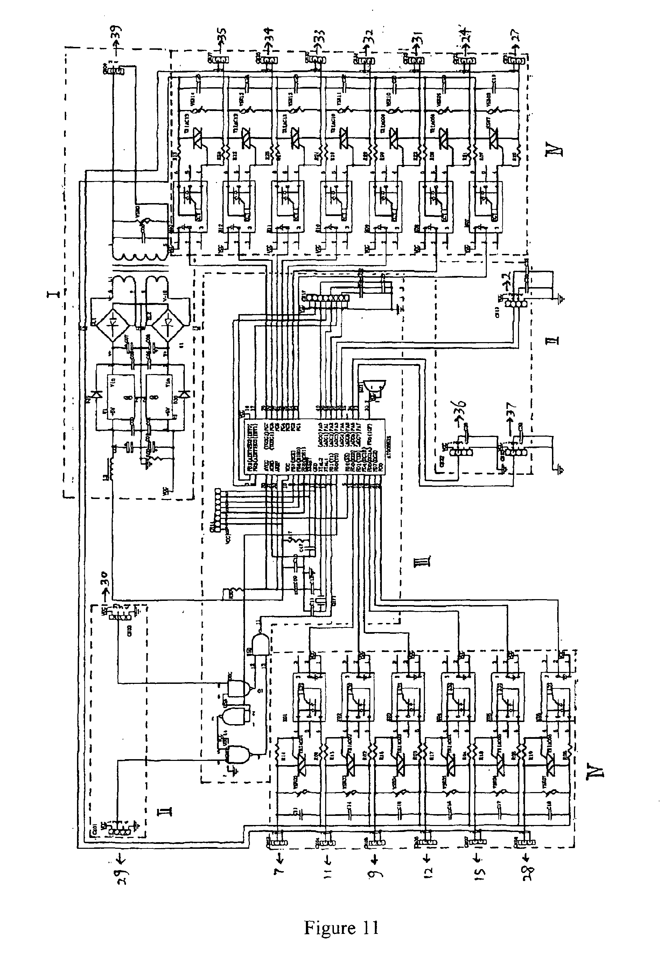

Refer to figure 11, the circuit diagram of the circuit control device of the invention, flushing lavatory with no water flushing system, we can see the four parts of the circuit block diagram listed in Figure 10. Wherein:

The first part is the direct current power supply circuit part 1, it consists of double voltage changer, bridge rectify circuit, three-terminal voltage regulator and its protective circuit diode and filter circuit. The alternating current inputs into the primary side of the changer and through the secondary side, outputs two lower voltage AC. And then, it inputs into the bridge rectify circuit and changes into a pulse direct current. Through the filter, it becomes a direct current. Through three-terminal voltage regulator and filter, it becomes a 5v DC and outputs two general ground +5v DC.

The third part is the core control circuit part 3, it consists of chip microcomputer AT90S8535 and its attached circuit. The attached circuit includes crystal vibration providing operating frequency, the resistance and capacitance used for upper reset, the four or negation gate integrated circuit used for the gating of the liquid level sensor, warning buzzer, the interface used for the serial programming and on-line communication and the interface used for connecting the key board and LED indicator. The crystal vibration is connected with the foot 12, 13 of the input end of the crystal vibration of the chip microcomputer. The two ends of the crystal vibration are connected with two grounding capacitances. The upper reset resistance is connected with the foot 9 of the chip microcomputer and the foot 9 is connected with the grounding capacitance. The negative pole of the buzzer is connected with the foot 20 of the chip microcomputer and the positive pole is connected with the +5v voltage. The interface used for the serial programming and on-line communication is respectively connected with +5v and the foot 10, 5, 6, 7, 8, 9, 11 through the connection terminal of the foot 8. At the same time, the foot 11 is grounding and the foot 10 is connected with +5v , a special line for the chip microcomputer. The interface of the keyboard and LED indicator is respectively connected with +5v, ground and the foot 3, 4, 17, 39, 38.

The chip microcomputer AT90S8535 is produced by ATMEL Company in USA, it is a eight bit AVR chip microcomputer product. It has the functions of the inner n. watchdog, ten bit ADC converter, SPI synchronous serial communication, serial download program, pulling high, high resistance input model and so on. The circuit can transfer the voltage analog signal sent by the temperature sensor into the digital signal through the ten bit ADC converter connected at the foot 33, 34. The circuit uses the external clock/counter on the T1 of foot 2 to do frequency test on the pulse signal sent by the liquid level sensor. The circuit also use the inner pulling high function on the foot 30,37 to identify the human body detection switching signal and send the instruction to the correspondent execution units driving circuit through the logical decision. The chip microcomputer occupies the +5v voltage output by the DC power circuit on foot 10 individually and another +5v voltage output by the DC power circuit provides the DC voltage of the whole circuit except the chip microcomputer. At the same time, the above DC voltage is connected on the external interrupt input interface INTO on the foot 16 of the chip microcomputer. The interrupt input interface is set as trailing edge trigger. At the moment of electricity failure, as the power consumption of the chip microcomputer is less, the +5v voltage applying for the chip microcomputer will keep for a very short time after the whole circuit powers fail. At this time, the chip microcomputer will detect the power-failure through the external interrupt input interface and protect the state field before the power-failure, so that the field can be restored and the work can be done continuously when powers on again. The design is against the effect of the short time power-failure or the voltage disturbance on the program decision.

The second part is the interface circuit of the sensor 2. The interface circuit of human body detection device consists of connection terminal and capacitance connected on the foot 36, 37. The above two feet are set as input and its states are pulling high. They are connected with ground and pulling low by the sensor to judge if there is person or not.

The liquid level sensor, its connection terminal of the interface is connected with the four or negation gate integrated circuit. The four or negation gate integrated circuit can gate the square wave input by the two liquid level sensors through the connection as shown in the figure. When the control end is gated to connect with the foot 1 of the chip microcomputer, the square wave inputs into the foot 2 of the chip microcomputer. The foot 1 is set as output and the foot 2 is set as the high-resistance state or pulling high state of the input. The high-low of the liquid level is determined in accordance with the frequency of the square wave sent by the liquid level sensor.

The temperature sensor, its interface circuit consists of connection and capacitance connected on the foot 33, 34 of the chip microcomputer. The two feet are set as input and present as the high-resistance state. The high-low of the temperature is determined by the voltage value sent by the temperature sensor.

The fourth part is the execution units driving circuit 4. It consists of thirteen complete same driving elements. Every driving element includes optical coupling driving circuit, supper power crystal brake tube, protective high pressure proof capacitance and piezoresistance, wherein:

The optical coupling driving circuit, its input end is connected with the signal output end of the chip microcomputer and +5v. The output end of the optical coupling is connected with the input end of the supper power crystal brake tube.

The supper power crystal brake tube, its output end is connected with the parallel connected high pressure capacitance, piezoresistance and execution units. As the chip microcomputer outputs the low electric potential, the light-emitting diode in the optical couple will brighten and the light-sensitive and two-way crystal brake tube in its inner output end conducts and drives the high power two-way crystal brake tube conduct so as to drive the correspondent execution unit. The zero passage driving circuit is set in the light-sensitive and two-way crystal brake tube of the optical couple driving circuit. It will conduct at the moment of receiving the optical signal and meeting the zero AC voltage. Thus, it can avoid the appearance of power waveform disorder caused by the sudden loading on the execution unit, and it also can avoid the damage of circuit and the loss of the execution unit and the program of the chip microcomputer.

The high pressure capacitance has the function of absorbing the high-frequency clutter.

The piezoresistance conducts at the time of overvoltage and has the protective function on the circuit and execution unit.

The output end of the above thirteen paths execution units driving elements is connected with the thirteen output base pins 14, 15, 18, 19, 21, 22, 23, 24, 25, 26, 27, 28, 29 of the chip microcomputer and the input end is connected respectively with crushing pump motor 7, urine collecting magnetic valve 11, stool collecting magnetic valve 9, stool crushing magnetic valve 12, medicine adding magnetic valve 15, upper flush liquid pump 28, lower flush liquid pump 27, stool discharge pump 24, headlight in WC 31, occupancy indicating lamp 32, air exchange fan 33, frost-resistant heater 34 and warmer 35. The execution unit is controlled by the correspondent base pin of the chip microcomputer.

### Industry Applicability

The invention has obvious advantages and beneficial effect comparing with the prior art. From the above technical manners we can see that the invention has completely no the limitations of the prior flushing lavatory when using and its structures are more reasonable and changeful. Thus it has the considerable utility and wide value of use in the industry. The advantages of the invention will be described as following:
1.The invention, the flushing lavatory with the circulated flushing and stool crushing structure. Aim at the disadvantage of the prior flushing lavatory-too much consumption of water, the invention can crush the stool and sheets and make the discharged sewage have better fluidity and stated pressure and delivery lift. During the procedure of stool crushing, the discharged sewage is transferred back into the toilet pan through the pipe and it makes the mixture of the flush liquid and sewage form a circulation along the toilet pan, crushing pump, pipe, toilet pan. If the time is permitted, the limited flush liquid can make the liquid flow going through the stool to become much at discretion. Whenever how difficult the stool is to be flushed, it can be crushed and flushed clean. The crushed stool will mix with the flush liquid as a gruel liquid and finally, the sewage will be discharged out through the pipe. When the procedure is finished, a small amount of gruel stool liquid may be left. At this time, use the flush liquid to flush it again. So the invention has the efficacy of using the discharged flush liquid to recycle and flush the toilet pan and maximum water saving.
2.The invention, the flushing lavatory with urine collecting device. Recur to setting the magnetic valve on the pipe of the urine collecting device and utilize the gravity of the urine and its good fluidity and the bad fluidity of the stool, and also recur to the obstruction of the crushing pump on the stool as it is at rest, the urine is conducted into the urine collecting box from the outlet of the crushing pump through the pipe. It makes the flushing lavatory has the function of urine collection, and at the same time has no effect on the function of flushing, stool discharge, stool crushing and so on. Then the invention can use the castoffto flush the lavatory and needn't use water.
3.The above urine collecting device can have automatic medicine adding device. The liquid medicine is a kind of liquid environment protection medicament with the function of deodorization and disinfection and it makes the processed stool and urine have no bad smell and innocuous and reach the demand of innocent. Thus it can meet the requirement of users and become more applicable. In order to make the medicine adding more reasonable, uniform and convenient, the invention stores the medicine in a medicine pot for long use. The environment protection medicine in the medicine pot is conducted into the urine collecting box through the pipe and the open and close of the pipe is controlled by the magnetic valve. Thus, when the magnetic valve is opening for a certain time, a certain amount of environment protection medicine will flow into the urine collecting box. Then the invention has the effect of automatic environment protection medicine adding.
4.The invention, flushing lavatory with double-pump flushing device. Recur to the double-pump flushing device and aim at the problem that the continuous accumulated sediment in the urine has bad effect on the flushing, the invention sets two pumps at the different level of the liquid storage box and draw out the liquid respectively. First, use the lower liquid with sediment to flush the lavatory and then use the upper clean liquid to flush. The lavatory is flushed in order and the urine sediment accumulation is avoided.
5.The invention, the flushing lavatory with the stool and urine automatic identification device discloses a stool and urine automatic identification method and its device. It can identify the stool or urine by the length of user's service time in the WC and can recognize the non-stool. The device not only can borrow the ideas from the thinking of using the user's leaving signal provided by the detection device to start the flushing of the stool or urine in prior WC, but also can utilize the user's leaving signal provided by the detection device to make the control system do pissing determination on user's action according to the service time from user entering the WC to leaving. Although the device can't decide that the user's action whose service time is longer than a eigenvalue is defecating by all means, but it can decide that the user's action whose service time is shorter than a eigenvalue isn't defecating. Having this distinguish method and identification device, for the user's action of non-stool, the simple flushing can be done by the flushing and stool crushing lavatory and the crushing procedure isn't needed. As the used flush liquid has no stool, so the urine collecting device can be reclaimed into the urine collecting box for reservation and needn't to be wasted. Thus, with the stool and urine automatic identification method and its device, the stool and urine can be identified in many user's actions and the system can cast off the complex and uncertainty of the manual determination. The invention has the function of processing the stool and urine with different modules automatically.
   The sample of the flushing lavatory made in accordance with the above devices and methods, through a period of actual test, the following data is get: the urine produced by each person for each service is 0.2-0.3 liter and most of the urine can be collected. After being collected, the urine will mix with the environment protection liquid medicine about 0.1% and become the flush liquid for the lavatory without bad smell and poison. It can keep no off-flavor for about one month. It makes the processed stool harmless. The invention can meet the requirements of users and become more applicable. The consumption of the flush liquid for each person when flushing the stool is only 0.5 liter. Calculate the reclaimed urine produced by defecating, the actual consumption of the urine is 0.2-0.3 liter, that is consumption of the urine for one person. When flushing the urine, all the urine and flush liquid are reclaimed into the urine collecting box. So it doesn't consume the flush liquid, on the contrary, the urine for one person is added. Thus, as the proportion of the stool and urine can keep equal, the flush liquid in the urine collecting will not used up. Actually, the number of people pissing is much more than defecating. That means the flushing system is difficult to face the problem of flush liquid used up. For example, the sewage temporary storage device of a WC whose capacity is two hundred liters, the discharge periodic time can be extended to more than four days. People can't smell the odor of the sewage outside one meter. Especially, the sewage has good fluidity when discharged into the sewer and can change into coarse paper solid in one day after it has been discharged on the ground surface. The capacity and weight can be reduced several decade times. After one month, people can uncover the coarse paper solid and the ground surface has no strange shape. It meets the requirement of environment protection.
6.The invention, no headwater flushing lavatory, recur to the no headwater flushing system, use the urine collecting device to collect the urine and utilize the water saving function of the circulated flushing and stool crushing lavatory to make the urine become the enough flush liquid for lavatory flushing. And it also uses the stool and urine automatic identification method and its device to cast off the dependent on the manual work. Finally, the good effect of flushing the toilet pan independent of headwater and manual water upbound is totally realized. It can be verified from the above examples of exploitation that the disclosed devices and methods of the invention combine together effectively, the flushing lavatory can change the limit urine into the sufficient supply of flush liquid. The invention makes the flushing of the lavatory cast off the dependent on the headwater completely and the discharge without bad smell and controllable. The cleaning and maintenance are very convenient. It also can let the normal operation of the lavatory cast off the dependent on the user's consciousness and make the lavatory become the automatic "fool WC" in the real meaning. In addition, in the place inconvenient to discharge, the flushing lavatory system can store the random discharged sewage temporarily and discharge it under control. It makes the lavatory more applicable in using and meet the requirements of users on the flushing lavatory products. The holistic profit can be increased and the invention also has considerable utilizing value in industry and can be widely spread.
7.The structural design, the using practicability and its cost benefit of the invention are all meet the requirement of industry development. The disclosed structure is the innovated design and unprecedented. No this kind of structure is published in the publications and disclosed before it is applied for a patent application. So the invention actually has novelty.
8.Comparing with the prior flushing lavatory, the invention has better technical advancement. Its particular structural feature and function are much advanced and the prior art can't compare with it. The invention has good technical advancement and practicability and also has the excellent effect of easy using. Other new functions are promoted in the invention and it really has the creativity and practicability.

Generally, the flushing lavatory with the particular structure has the above advantages and practical value. It has innovation on the space structure conformation. Comparing with the prior flushing lavatory, many new functions have been promoted and its structure is simple. The invention has big technical progress and the excellent effect of easy using. It is a new design with novelty, advancement and practicability and has widely utilizing value in the industry.

The above description is only the better embodiment and not any formal limitation on the invention. Any technicians in this field who use the disclosed technical content to do some equivalent change or modification and get the equivalent embodiment, which doesn't break away the technical content of the invention, the said simple modification, equivalent change or modification on the above embodiments in accordance with the technical substance of the invention all belongs to the scope of the technical scheme of the invention.

## Claims

1. A flushing lavatory, it includes the toilet pan, crushing pump which is set at the outlet valley of the bottom of the toilet pan; wherein it contains the innovated toilet pan and circuit control device, Wherein:
the innovated toilet pan, in the bottom near the front, a crush pipe is connected; the magnetic valve controlling the open and close of the crush pipe is set in; the crush pipe is connected with one side of the outlet valley of the crushing pump and at the bottom of the crush pipe, a stool collecting pipe is set; a magnetic valve is mounted in the stool collecting pipe to control the open and close of it; the other end of the pipe is an open end, it can discharge the rejection out of the system;
the circuit control device can control all the above electric appliances;
the above structures combine together and configure the invention of the flushing lavatory with the recycled flushing and stool crushing structure; when flush the stool, under the control of the circuit control device, the flush liquid will form a positive circulation in the ring-shaped path made by toilet pan, crushing pump, crushing pump magnetic valve, rush pipe and toilet pan; the stool in the pan is flushed into the crushing pump to crush and it will mix with the flush liquid and become a gruel liquid; the circuit control device will open the magnetic valve controlling the open and close of the stool collecting pipe; then the crushing pump works and the sewage in the toilet pan will go through the crushing pump, magnetic valve, stool collecting pipe and will be discharged out of the system; through the action of recycled flushing structure, people can save a large amount of water and the water saving effect is rather considerable.

2. The prescribed flushing lavatory of claim 1, wherein at the front of the said toilet, a flush pipe is connected; the pipe has a magnetic valve to control open and close of the pipe; the circuit control device controls the magnetic valve; one end of the flush pipe is connected compressive flush liquid or headwater, and the other end is an outlet nozzle, which is set in front of the toilet pan so that the nozzle can make the flush liquid reach all the positions the sewage will go; under the control instruction of the circuit control device, the magnetic valve opens and the flush liquid will flow into the toilet pan to flush with the action of the headwater pressure.

3. The flushing lavatory of claim 1, wherein at the front of the said toilet, a flush liquid pump is connected and a flush pipe is set; the outlet nozzle of the open end of the flush pipe is mounted at the front of toilet, the other end is connected with the flushing pump; one end of the flush pipe is connected with the flush liquid or headwater, the other end-the outlet nozzle is set at the front tip of the toilet, so that the flush liquid can reach all the positions the sewage will go; the liquid will flow into the toilet pan with the action of flush liquid pump.

4. The flushing lavatory of claim 3, wherein a urine collecting device is included; the device consists of urine collecting pipe, urine collecting box and circuit control device; wherein:
the urine collecting pipe is connected with valley of the discharge outlet at the back and bottom of the toilet; at the bottom of the urine collecting pipe, a stool collecting pipe is connected, which has a magnetic valve controlling the open and close of the pipe; another end of urine collecting pipe is extended and set in the urine collecting box; the urine collecting pipe has a magnetic valve controlling the open and close of the pipe;
the box is an enclosed case and the urine collecting pipe and flush liquid pump are set in;
the said structures combine together and configure the no headwater flushing system-recycled and stool crush flushing lavatory with urine collecting device; the circuit control device controls the open and close of the urine collecting magnetic valve and it also can control the crushing pump not working; the urine flows from the valley of the discharged outlet of the toilet and goes through the crushing pump, urine collecting pipe and urine collecting magnetic valve into the urine collecting box, then urine collecting is finished; when the crushing pump doesn't work, it can prevent the stool flowing into the urine collecting box and the separation of liquid and solid is realized; with the urine collecting device, the lavatory may have the function of automatic flushing under the intelligent control.

5. The flushing lavatory of claim 4, wherein an automatic liquid medicine adding device is set; the liquid medicine adding device consists of medicine pot and the circuit control device, wherein:
the medicine pot is in the upper side of the urine collecting box; the liquid medicine is stored in the medicine pot; a medicine conduct pipe is connected at the bottom of the medicine pot; another end of the pipe is mounted on the urine collecting box or connected with the urine conduct pipe then to the urine collecting box; a circuit control device is set in the urine conduct pipe to control the magnetic valve; the magnetic valve can control the open and close of the medicine conduct pipe;
the circuit control device controls the said electrical appliances and magnetic valve;
the above structures combine together and configure the invention of no headwater flushing lavatory with automatic liquid medicine adding device; through the circuit control device the medicine adding magnetic valve may open during each urine collection; the medicine in the medicine pot will mix with the urine flowing from the outlet of the toilet pan and become a mixed flush liquid; it can eliminate the bad smell of the urine; the invention has the function of automatic environment protection liquid medicine adding and bad smell elimination.

6. The flushing lavatory of claim 4, wherein a double-pump flushing device is set; the double-pump flushing device includes upper flush liquid pump, lower flush liquid pump, lower liquid conduct pipe, upper clean liquid conduct pipe and circuit control device, wherein:
the lower flush liquid pump is fixed in the lower part of the upper flush liquid pump and at the bottom of the urine collecting box; the lower and upper flush liquid pump configure the double-pump flushing structure;
the lower liquid conduct pipe, its upper end is lower liquid nozzle, which is fixed at the bottom of the toilet and the other end is connected with the lower flush liquid pump;
the upper clean liquid conduct pipe, its upper end is fixed with the clean liquid outlet nozzle at the front tip of the toilet and the other end is connected with the upper clean liquid pump;
the said circuit control device controls the above electrical appliances;
the above structures combine together and configure the invention-no headwater flushing lavatory with double-pump flushing device; with the control of circuit control device, the lower flush liquid pump can draw out the urine sediment from the lower part of the urine collecting box and spray at the back of the toilet accumulating the stool and urine and flush it through the lower liquid nozzle; and then the upper clean liquid pump will draw out the urine clean liquid from the upper part of the urine collecting box; through the upper clean liquid nozzle, it also can spray at the back of the toilet accumulating the stool and urine and flush the toilet repeatedly; the invention has the function of flushing the toilet extremely clean and no urine sediment left.

7. The flushing lavatory of claim 6, wherein a concentrated nozzle structure is set; at the upper tip end of the lower liquid conduct pipe of the lower flush liquid pump, a one-way check valve is connected; the valve is parallel connected with the stool crush pipe and then connected together with the lower liquid nozzle on the top; the above structures combine with each other and configure the invention-no headwater flushing lavatory with concentrated nozzle structure and double-pump flushing device.

8. The flushing lavatory of claim 7, wherein a human body detection device is set; the device is located in the suitable position of the WC; it is used in the circuit control device to detect if anyone is using the flushing lavatory; the detection device can be the photodetection device mounted in the WC or the passive human body infrared detector and also can be the pressure sensor set under the floor of the WC or the position switch mounted on the door lock or cross-pin of WC and other kinds of detection devices; the above structures combine together and configure the invention-flushing lavatory with human body detection device; the working state of the above detection devices can detect if anyone is using the flushing lavatory and is controlled by the circuit control device.

9. The flushing lavatory of claim 8, wherein a liquid level induction system is set; the device consists of liquid level sensor, which is set in the suitable position of the urine collecting box; the above structures combine together and configure the invention-no headwater flushing lavatory with the liquid level induction system.

10. The flushing lavatory of claim 9, wherein the prescribed human body detection device and the circuit control device are the automatic identification method in accordance with the stool and urine; the method is: at first, record the time people using the lavatory; the timing begins from the detection device provides the user entry signal; the timing ends at the time of the detection device provides the user leaving signal; the circuit control device will identify the stool or urine according to the length of time made by the timing device; if the using time is shorter than an eigenvalue t0, it is not the stool; if a specific person spends long time when pissing, the device still can identify that it is not the stool correctly.

11. The flushing lavatory of claim 10, wherein a stool and urine identification device which can identify the stool or urine automatically; the device consists of circuit control device, detection device and the program circuit set in the circuit control device to identify the stool or urine; the detection device is set as a sensor and connected with the input end of the circuit control device; it can transfer the detected signal to the circuit control device.

12. The flushing lavatory of claim 11, wherein a sewage temporary storage device is further set; the said device consists of a stool collecting box, which is an enclosed case and mounted at the outlet of the lower end of the stool collecting pipe of the toilet; the above structures combine together and configure the invention-discharge controllable flushing lavatory.

13. The flushing lavatory of claim 12, wherein the said stool collecting box has a stool discharge pump, which is set at the bottom of the stool collecting box; a discharge pipe is connected with the pump and extended upward out of the stool collecting box; the outlet of the pipe is connected with the external collection entrance;
the above structures combine together and configure the invention-electric control discharge flushing lavatory; the liquid stool in the toilet pan will be pumped out by the crushing pump and flow into the stool collecting box; when it is necessary, the stool liquid will be pumped out by the stool discharge pump and the electric control discharge is realized.

14. The flushing lavatory of claim 13, wherein the said circuit control device consists of human body detection device, stool box liquid level sensor, urine box liquid level sensor, control circuit, upper temperature sensor, lower temperature sensor, crushing pump motor, urine collecting magnetic valve, stool crushing magnetic valve, medicine adding magnetic valve, upper flush liquid pump, lower flush liquid pump, stool discharge pump, headlight in WC, occupancy indicating lamp, air exchange fan, frost-resistant heater, warmer; Wherein:
the stool box liquid level sensor, urine box liquid level sensor, upper temperature sensor, lower temperature sensor and human detection device are all sensors;
the crushing pump motor, urine collecting magnetic valve, stool collecting magnetic valve, stool crushing magnetic valve, medicine adding magnetic valve, upper flush liquid pump, lower flush liquid pump, stool discharge pump, headlight in WC, occupancy indicating lamp, air exchange fan, frost-resistant heater, warmer are execution units;
the said control circuit receives the signal of liquid level, temperature and occupancy transferred from the above sensors and decides which execution unit works, the length of working and working times.

15. The flushing lavatory of any claim from claim 1 to claim 14, wherein the said circuit control device consists of the first part direct current power supply part 1, the second part sensor interface part 2, the third part control circuit part 3, the fourth part execution units driving circuit part 4; the sensors transfer the signals to the control circuit 3 through the sensor interface 2; after judged and calculated by the control circuit, the signals are transferred to the execution units driving circuit 4; through the power magnification of the driving circuit 4, it will drive the execution units to operate and work.

16. The flushing lavatory of claim 15, wherein the said circuit control device, wherein: the direct current power supply circuit part 1 consists of double voltage changer, bridge rectify circuit, three-terminal voltage regulator and its protective circuit diode and filter circuit; the alternating current inputs into the primary side of the changer and through the secondary side, outputs two lower voltage AC; it inputs into the bridge rectify circuit and changes into a pulse direct current; through the filter, it becomes a direct current; through three-terminal voltage regulator and filter, it becomes a 5v DC and outputs two general ground +5v DC;
the core control circuit part 3 consists of chip microcomputer and its attached circuit; the attached circuit includes crystal vibration providing operating frequency, the resistance and capacitance used for upper reset;
the chip microcomputer can change the voltage analog signal sent by the temperature sensor into the digital signal through the AD converter; it also can make the frequency test on the pulse signal transferred by the liquid level sensor through the external clock/counter and identify the human detection switch signal through the inner set pulling high input function; it can send the instructions to the correspondent execution units driving circuit by logical judgment;
the sensor interface circuit 2, the human body detection device interface circuit includes connection terminal and capacitance and is connected to the chip microcomputer to judge having person or not;
the liquid level sensor, its connection terminal of the interface is connected with the four or negation gate integrated circuit and then to the chip microcomputer; it judges the high-low of the liquid level by the frequency of the square wave signal transferred from the liquid level sensor;
the temperature sensor, its interface circuit includes the connection terminal and capacitance and is connected with the chip microcomputer; it judges the high-low of the temperature by the frequency of the square wave signal transferred from the liquid level sensor;
the execution units driving circuit 4, it consists of thirteen complete same driving elements; every driving element includes optical coupling driving circuit, supper power crystal brake tube, protective high pressure proof capacitance and piezoresistance, wherein,
the optical coupling driving circuit, its input end is connected with the signal output end of the chip microcomputer and +5v; the output end of the optical coupling is connected with the input end of the supper power crystal brake tube;
the supper power crystal brake tube, its output end is connected with the parallel connected high pressure capacitance, piezoresistance and execution units;
the output end of the above thirteen paths execution units driving elements is connected with the thirteen output base pins of the chip microcomputer and the input end is connected respectively with crushing pump motor, urine collecting magnetic valve, stool collecting magnetic valve, stool crushing magnetic valve, medicine adding magnetic valve, upper flush liquid pump, lower flush liquid pump, stool discharge pump, headlight in WC, occupancy indicating lamp, air exchange fan, frost-resistant heater and warmer; the execution unit is controlled by the correspondent base pin of the chip microcomputer.
